Europäisches Patentamt

European Patent Office

Office européen des brevets

(11) Veröffentlichungsnummer: **0 257 130**
**A1**

(12) **EUROPÄISCHE PATENTANMELDUNG**

(21) Anmeldenummer: 86112006.1

(22) Anmeldetag: 29.08.86

(51) Int. Cl.⁴: **B01D 3/06** , D01F 13/02

(43) Veröffentlichungstag der Anmeldung:
02.03.88 Patentblatt 88/09

(84) Benannte Vertragsstaaten:
AT CH DE FR LI

(71) Anmelder: **Ebner & Co. KG Anlagen und
Apparate
Industriestrasse 8
D-6419 Elterfeld(DE)**

(72) Erfinder: **Ebner, Karl
Theodor-Heuss-Strasse 3
D-6370 Oberursel/Ts.(DE)**
Erfinder: **Ebner, Stefan, Dipl.-Ing.
Theodor-Heuss-Strasse 3
D-6370 Oberursel/Ts.(DE)**

(74) Vertreter: **Jaeger, Klaus, Dipl.-Chem. Dr.
JAEGER & PARTNER Patentanwälte
Pippinplatz 4a
D-8035 Gauting(DE)**

(54) **Eindampfverfahren.**

(57) Es wird ein Verfahren und eine Anlage zum Eindampfen von wässrigen Flüssigkeiten beschrieben, bei welchem ein Teil des verdampften Wassers als höher gespannter Abdampf abgezogen und der restliche Teil in einer mehrstufigen Entspannungseindampfanlage ausgedampft wird. Das Eindampfverfahren zeichnet sich durch einen besonders niedrigen spezifischen Dampfverbrauch aus. Die Erfindung schlägt vor, die Erzeugung des höher gespannten Abdampfes in einer Verdampferstufe (47) vorzunehmen, die in den Flüssigkeitskreislauf der Entspannungseindampfanlage geschaltet ist.

FIG 1

EP 0 257 130 A1

## Eindampfverfahren

Die Erfindung betrifft ein Eindampfverfahren für wässrige Flüssigkeiten und eine Anlage zur Durchführung des Verfahrens. Das Verfahren eignet sich speziell zum Eindampfen von - schwefelsäurehaltigen Spinnbädern, wie sie in der Zellwollindustrie anfallen.

Um die Energiekosten klein zu halten, wird die einzuengende Flüssigkeit in hintereinandergeschalteten Eindampfstufen eingeengt, wobei die abgedampften Brüden in Wärmeaustauschern kondensiert und die dabei freiwerdende Wärme zur Erwärmung der einzuengenden Flüssigkeit genutzt wird. Beispielsweise können die kondensierten Brüden zur Beheizung der jeweils nächsten Verdampferstufe benutzt werden oder bei Kreislauf führung der einzuengenden Flüssigkeit hintereinandergeschalteten Aufwärmern zur stufenweisen Aufheizung der Flüssigkeit zugeführt werden.

Durch die Vergrößerung der Stufenzahl solcher Eindampfanlagen von 4 auf 8 bis 11 Stufen konnte der spezifische Dampfverbrauch, das heißt der Quotient aus den verdampften Brüden einer Eindampfanlage und der der Anlage zugeführten Heizdampfmenge, von 0,4 - 0,35 auf ca. 0,26 reduziert werden, so daß zum Beispiel bei einer Erzeugung von 12 t/h Wasserdampf aus einem Spinnbad etwa 1,68 bis 1,08 t Dampf je Stunde eingespart werden können.

Die Zahl der Eindampfstufen kann jedoch nicht beliebig erhöht werden und erreicht bei etwa 10 bis 12 Stufen ihre Obergrenze, da wegen der Reaktionsfähigkeit der Schwefelsäurelösungen deren Prozeßtemperatur nicht beliebig gesteigert werden kann. Bei Verwendung von Kohlenstoffrohren oder gummierter Apparaturen in den Wärmeübertragern ist bei 110 °C Schwefelsäuretemperatur und 130° Heizdampftemperatur die zulässige Obergrenze erreicht.

Eine typische Eindampfanlage mit einer Kapazität von etwa 115 m³/h Spinnbad besteht aus 11 Entspannungsverdampfern und etwa 8 bis 10 Aufwärmern sowie einem zwischen die Entspannungsverdampfer und die Aufwärmer geschaltetem Heizkörper. Das Spinnbad tritt mit etwa 45 °C in die Eindampfanlage ein und wird in dem Aufwärmern mit Hilfe der aus den Entspannungsstufen stammenden Brüden auf etwa 90 °C stufenweise erwärmt, dann in einem Heizkörper, der mit Frischdampf von 130 °C beaufschlagt wird, auf 110 °C erhitzt und danach in den Entspannungsstufen stufenweise abgekühlt. Das Spinnbad tritt nach Passieren der Entspannungsstufen aus der Eindampfanlage aus. Der spezifische Dampfverbrauch einer solchen Anlage beträgt 0,265; bei einer erzeugten Dampf menge von 12 t/h entspricht dies einer Heizdampfmenge von 3,18 t/h.

Der spezifische Dampfverbrauch kann weiter durch Vorschaltung eines Verdampfers vor die Entspannungseindampfanlage verringert werden, wenn Bedarf für Abdampf mit geringer Spannung, beispielsweise 1,3 bar bis 1,5 bar besteht. Beispielsweise kann die aus 115 m³/h Spinnbad abzudampfende Wassermenge von 12 t/h in der Weise abgezogen werden, daß 3,2 t/h Dampf in einer vorgeschalteten Eindampfanlage abgezogen werden, während die Hauptmenge on 8,8 t/h Dampf in der oben beschriebenen Entspannungseindampfanlage mit einem spezifischen Dampfverbrauch von 0,265 abgedampft werden. Die Heizdampfgesamtmenge setzt sich aus 3,85 t/h Heizdampf für die Vorwärmung der einzudampfenden Lösung sowie die Erzeugung von 3,2 t/h Nutzdampf und 2,33 t/h Dampf (0,265•8,8 t/h) für die elfstufige Entspannungseindampfanlage zusammen. Zieht man von der resultierenden Heizdampfgesamtmenge von 6,18 t/h die 3,2 t/h wiedergewonnenen Dampf aus der vorgeschalteten einstufigen Eindampfanlage ab, so erhält man den effektiven Dampfverbrauch von 2,98 t/h entsprechend einem spezifischen Dampfverbrauch von 0,248. Die Reduzierung des spezifischen Dampfverbrauches von 0,265 auf 0,248 bringt eine Dampfersparnis von 204 kg/h mit sich.

Die Aufgabe der vorliegenden Erfindung ist es nun, den spezifischen Dampfverbrauch einer Eindampfanlage der eingangs genannten Art bei gleichzeitiger Verringerung der Anlagekosten zu senken.

Zur Lösung dieser Aufgabe wird ein Eindampfverfahren gemäß Anspruch 1 und eine Eindampfanlage gemäß Anspruch 4 vorgeschlagen. Weitere Ausgestaltungen der Erfindung sind Gegenstand der Unteransprüche.

Die Verringerung der Heizdampfmenge bzw. des spezifischen Dampfverbrauchs beruht also darauf, daß die Verdampferstufe zur Erzeugung des Nutzdampfes nicht mehr wie bisher der Entspannungseindampfanlage vorgeschaltet ist, sondern in den Kreislauf der Entspannungseindampfanlage eingeschaltet ist. Es wird also vorgeschlagen, die einzuengende Lösung in eine Entspannungsstufe der Hintereinandergeschalteten Entspannungsstufen einzuleiten, die der Temperatur von etwa 50 °C des Spinnbades angepasst ist, die eingeengte Spinnbadlösung der Verdampferstufe zur Erzeugung des Nutzdampfes zuzuführen, wobei vorzugsweise die Spinnbadlösung bis auf die Temperatur der Verdampferstufe aufgeheizt wird, und - schließlich die in der Verdampferstufe eingeengte Spinnbadlösung der ersten, das heißt der durch die

relativ höchste Betriebstemperatur gekennzeichneten Entspannungsstufe und den folgenden Entspannungsstufen zuzuleiten. Die eingeengte Spinnbadlösung tritt vorzugsweise aus der Entspannungsstufe aus der Eindampfanlage aus, die unmittelbar der Entspannungsstufe vorausgeht, in die die einzuengende Spinnbadlösung in die Eindampfanlage eingeleitet wird.

Bei einem Eindampfverfahren, das den vorstehend beschriebenen verfahrenstechnischen Maßnahmen entspricht, kann also Heizdampf bzw. Energie dadurch eingespart werden, daß auf die Aufwärmung der einzudampfenden Flüssigkeit in einem getrennt arbeitenden einstufigen Eindampfer verzichtet werden kann, da die Flüssigkeit der Eindampfanlage bereits mit der Eindampftemeratur zur Verfügung steht. Die Verlegung des Eindampfers in den Flüssigkeitskreislauf der Entspannungseindampfanlage verringert auch die Anlagekosten, da die dem Eindampfer vorgeschalteten Aufwärmer nun entfallen können.

Mit den vorstehend beschriebenen verfahrenstechnischen Maßnahmen kann ein spezifischer Dampfverbrauch in der Größenordnung von 0,21 erreicht werden. Bezogen auf das Ausgangsbei spiel bedeutet dies, daß bei einer Dampfmenge von 12 t/h die Senkung des spezifischen Dampfverbrauchs von 0,248 auf 0,21 einer eingesparten Dampfmenge von 456 kg/h entspricht.

Vorzugsweise ist hinter die zu einem Block zusammengeschalteten Entspannungsstufen ein Block von Wärmetauschern als Aufwärmer geschaltet, wobei die Aufwärmer von dem in den Entspannungsstufen verdampften Brüden als Heizdampf gespeist werden. Hinter den letzten Aufwärmer, das heißt den Wärmeaustauscher mit der relativ höchsten Betriebstemperatur, ist zur Aufheizung der einzuengenden Flüssigkeit ein Heizkörper geschaltet, in dem vorzugsweise die einzuengende Lösung auf die Temperatur der nachgeschalteten Verdampferstufe gebracht wird.

Sowohl der Verdampfer zur Erzeugung von Nutzdampf als der Heizkörper können mit Heizdampf betriebene Aggregate sein, deren Heizdampfkondensat zur Erwärmung der einzuengenden Flüssigkeit ausgenützt werden kann. So kann zum Beispiel das Heizdampfkondensat aus dem Verdampfer und dem Heizkörper einem Entspanner zugleitet werden, dessen Brüden einem der Aufwärmer als Heizmedium zugeleitet wird.

Die Erfindung ist in dem folgenden Ausfühungsbeispiel verdeutlicht. So zeigt die einzige Figur, nämlich

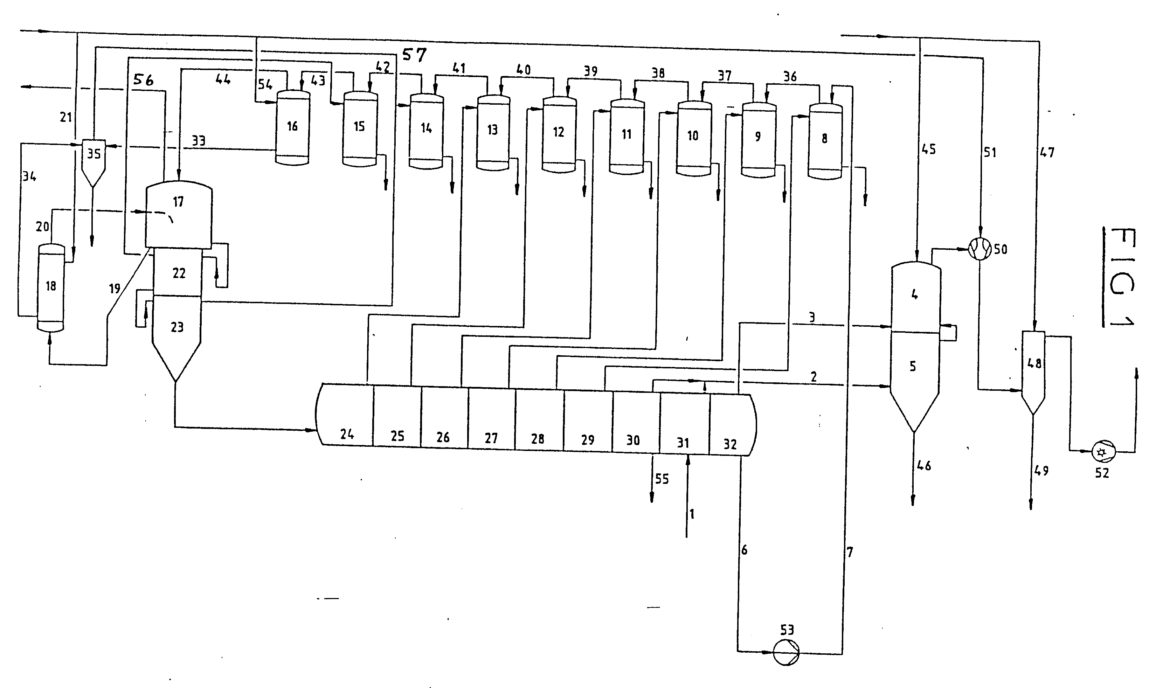

Fig. 1 ein Fließbild einer Anlage gemäß der Erfindung.

Das einzuengende Spinnbad von etwa 50 °C wird durch Leitung 1 in die Verdampferstufe 31, die als liegender Entspannungsverdampfer ausgebildet ist, in die Eindampfanlage eingeführt. Das Spinnbad kühlt sich beim Durchlauf dieser Verdampferstufe und derfolgenden Verdampferstufe 32 auf etwa 45 °C ab. Der bei der Entspannung entstehende Brüden wird über die Verbindungsleitung 2 bzw. 3 aus den Verdampferstufen 31 bzw. 32 abgeführt und in den Wassermischkondensatoren 4 bzw. 5 kondensiert.

Das die Verdampferstufe 32 über Ablaufleitung 6 verlassende Spinnbad wird mittels einer Pumpe 53 in die Wärmeaustauschkette 8 bis 15 gepumpt. Jedem Aufwärmer ist eine Entspannungsstufe zugeordnet, aus der die zur Beheizung des Aufwärmers erforderlichen Brüden stammen. So sind die Entspannungsstufen 22 bis 30 in gleicher Reihenfolge den Aufwärmern 15 bis 8 zugeordnet. Die in den Aufwärmern auskondensierten Brüden werden über separate Abläufe abgeleitet.

Die Aufwärmer sind über die Spinnbadleitungen 36 bis 42 miteinander verbunden. Das Spinnbad verläßt den letzten Aufwärmer 15 über Leitung 43 und tritt in einen Heizkörper 16 ein, der über Leitung 54 mit überhitztem Wasserdampf von 130 °C mit 2,8 bar beaufschlagt ist. Hier wird das Spinnbad auf die Temperatur der folgenden Verdampferstufe 17, etwa 110 °C, aufgeheizt. Das Heizdampfkondensat wird aus dem Heizkörper 16 über Leitung 33 einem Entspanner 35 zugeführt.

Der Verdampfer 17, in den das auf 11 °C aufgeheizte Spinnbad über Leitung 44 eingeführt wird, wird von einem Heizkörper 18 erhitzt. Der Heizkörper 18 ist außerhalb des Verdampfers 17 angeordnet und über Umwälzleitungen 19,20 mit diesem verbunden. Der Heizdampf für den Heizkörper 18 wird diesem über Leitung 21 zugeführt. Das Heizdampfkondensat verläßt den Heizkörper 18 über Leitung 34 und wird dem Entspanner 35 zugeführt. Bei einer Heizdampftemperatur von 130 °C kann im Verdampfer eine Temperatur von etwa 110 °C eingestellt werden. Der im Verdampfer 17 erzeugte Nutzdampf verläßt diesen über Leitung 56 bei einer Temperatur von etwa 110 °C und einem Druck von 1,3 bis 1,5 bar.

Vom Verdampfer 17 läuft dann das Spinnbad weiter über die Entspannungsstufen 22 bis 30. Das eingedickte Spinnbad verläßt die Eindampfanlage über Leitung 55.

Im Entspanner 35 wird das aus dem Heizkörper 18 und dem Verdampfer 17 stammende Heizdampfkondensat zur Aufwärmung des Spinnbades genutzt. Die in dem Entspanner aus dem Heizdampfkondensat erzeugten Brüden werden über Leitung 57 dem Aufwärmer 14 zugeführt. Der Aufwärmer 14 wird außerdem mittels der in der Entspannungsstufe 23 erzeugten Brüden beheizt. Das abgekühlte Heizdampfkondensat wird aus dem Entspanner 35 bei einer Temperatur von etwa 90 °C abgeleitet.

Die Entlüftung der Anlage erfolgt über die Vorentlüftungsdampfstrahlapparatur 50, die über Leitung 51 mit Heizdampf von 130 °C betrieben wird und eine nachgeschaltete Vakuumpumpe 52, wobei zwischen die Vorentlüftungsdampfstrahlapparatur 50 und die Vakuumpumpe 52 ein Hilfsmischkondensator 48 geschaltet ist.

Das Kühlwasser für die Mischkondensatoren 4,5 und 48 wird über die Leitungen 45 bzw. 47 zugeführt und barometrisch über Leitung 46 bzw. 49 abgeführt.

Wenn aus 115 m³ / Spinnbad 12 t/h Wasserdampf abgezogen werden soll, indem 3,2 t/h Wasserdampf in der Verdampferstufe 17 erzeugt werden und in den Entspannungsstufen 22 bis 32 8,8 t/h Abdampf abgezogen werden, ergibt sich folgende Energie-und Dampfbilanz:

```
Heizdampf für 17:                        3,39 t/h
Heizdampf für die restliche Anlage:      2,33 t/h
Summe                                    5,72 t/h
Nutzdampf:                               3,2  t/h
Effektiver Dampfverbrauch                2,52 t/h
```

Ein effektiver Dampfverbrauch von 2,52 t/h entspricht bei einer Brüdenmenge von 12 t/h einem spezifischen Dampfverbrauch von 0,21.

## Ansprüche

1. Eindampfverfahren für wässrige Flüssigkeiten, bei welchem ein Teil des verdampften Wassers als höher gespannter Abdampf abgezogen wird und der restliche Teil in einer mehrstufigen Entspannungseindampfanlage ausgedampft wird,
dadurch **gekennzeichnet,**
daß die Erzeugung des höher gespannten Abdampfes in einer Verdampferstufe (17) erfolgt, die in den Flüssigkeitskreislauf der Entspannungseindampfanlage geschaltet ist.

2. Verfahren nach Anspruch 1,
dadurch **gekennzeichnet,**
daß nach Eindampfen der Flüssigkeit in den Entspannungsstufen (22-32) der Entspannungseindampfanlage diese in Aufwärmstufen (8-15) aufgewärmt und dann in einer Heizstufe (16) weiter erhizt wird bis maximal auf die Eindampftemperatur der Verdampferstufe (17), wobei als Heizmedium der Aufwärmstufen (8-15) die in den Entspannungsstufen (22-32) erzeugten Brüden dienen.

3. Verfahren nach Anspruch 2,
dadurch **gekennzeichnet,**
daß das Heizdampfkondensat der Heizstufe (16) und der Verdampferstufe (17) in einen Entspanner (35) geleitet und dort entspannt wird und der so erzeugte Brüden zur Aufwärmung der einzudampfenden Flüssigkeit genutzt wird.

4. Eindampfanlage mit mehreren Entspannungsstufen, Aufwärmstufen und einer Verdampferstufe zur Erzeugung von Nutzdampf nach einem der Ansprüche 1 bis 3,
dadurch **gekennzeichnet,**
daß die Entspannungsstufen (22-32), Aufwärmstufen (8-15) und die Verdampferstufe (17) hintereinandergeschaltet sind und einen Kreislauf bilden.

5. Eindampfanlage nach Anspruch 4,
dadurch **gekennzeichnet,**
daß die Verdampferstufe (17) zwischen die letzte Aufwärmstufe (15) und die erste Entspannungsstufe (24) geschaltet ist, wobei eine Heizstufe (16) zwischen der letzten Aufwärmstufe (15) und der Verdampferstufe (17) vorgesehen ist.

6. Eindampfanlage nach einem der Ansprüche 4 oder 5,
dadurch **gekennzeichnet,**
daß die Entspannungsstufen (22-32) und die Aufwärmstu fen (8-15) je als ein Block hintereinandergeschaltet sind.

7. Eindampfanlage nach einem der Ansprüche 4 bis 6,
dadurch **gekennzeichnet**,
daß Brüdenleitungen zwischen je einer Entspannungsstufe (22-32) und je einer Aufwärmstufe (8-15) zu deren Beheizung vorgesehen sind.

8. Eindampfanlage nach einem der Ansprüche 1 bis 7,
dadurch **gekennzeichnet**,
daß ein von dem in der Heizstufe (16) bzw. Verdampferstufe (17) anfallenden Heizdampfkondensat gespeister Entspanner (35) vorgesehen ist, dessen Brüden der Beheizung einer Aufwärmstufe (14) dienen.

9. Verwendung des Verfahrens nach einem der Ansprüche 1 bis 3 zum Eindampfen von Spinnbadlösungen.

FIG 1

0 257 130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 072 045 (METALLGESELLSCHAFT) * Ansprüche 1, 4; Seite 2, Absatz 2 * | 1,3,8 | B 01 D    3/06 D 01 F   13/02 |
| | --- | | |
| A | DE-C-  956 752 (METALLGESELLSCHAFT) * Ansprüche 1-4 * | 1,4 | |
| | ----- | | |

RECHERCHIERTE SACHGEBIETE (Int. Cl.4)

B 01 D    1/00
B 01 D    3/00
C 02 F    1/00
D 01 F   13/00

Der vorliegende Recherchenbericht wurde für alle Patentansprüche erstellt.

| Recherchenort | Abschlußdatum der Recherche | Prüfer |
|---|---|---|
| BERLIN | 22-02-1987 | KESTEN W.G. |